(19) **Europäisches Patentamt**
**European Patent Office**
**Office européen des brevets**

(11) **EP 3 813 457 A1**

(12) **EUROPEAN PATENT APPLICATION**
published in accordance with Art. 153(4) EPC

(43) Date of publication:
**28.04.2021 Bulletin 2021/17**

(21) Application number: **19838576.7**

(22) Date of filing: **18.06.2019**

(51) Int Cl.:
***H04W 72/04*** (2009.01)

(86) International application number:
**PCT/CN2019/091783**

(87) International publication number:
**WO 2020/015494 (23.01.2020 Gazette 2020/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **18.07.2018 CN 201810792771**

(71) Applicant: **Huawei Technologies Co., Ltd.**
**Longgang District**
**Shenzhen, Guangdong 518129 (CN)**

(72) Inventors:
• **ZHANG, Jinfang**
**Shenzhen, Guangdong 518129 (CN)**
• **SU, Hongjia**
**Shenzhen, Guangdong 518129 (CN)**
• **XIANG, Zhengzheng**
**Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **DATA TRANSMISSION METHOD, NETWORK DEVICE, COMMUNICATION DEVICE AND STORAGE MEDIUM**

(57) Embodiments of this application provide a data transmission method, a network device, a communications device, and a storage medium. The method includes: The network device determines a time window of a target communications device group, where a distance between two communications devices in the target communications device group is less than or equal to a threshold, and the time window is used to enable at least two communications devices in the target communications device group to send and receive data in the time window through sidelink. The network device sends, to the at least two communications devices in the target communications device group, first indication information indicating the time window. Because the distance between the two communications devices in the target communications device group is less than or equal to a distance threshold, the at least two communications devices in the target communications device group are relatively close to a communications device used as a receive end. In this way, mutual interference between data sent by the communications devices can be avoided when there is a relatively large difference between distances from communications devices that send data in a same time window to the receive end, thereby improving a decoding ratio of the communications device used as the receive end.

FIG. 3

Printed by Jouve, 75001 PARIS (FR)

## Description

This application claims priority to Chinese Patent Application No. 201810792771.7, filed with the Chinese Patent Office on July 18, 2018 and entitled "DATA TRANSMISSION METHOD, NETWORK DEVICE, COMMUNICATIONS DEVICE, AND STORAGE MEDIUM", which is incorporated herein by reference in its entirety.

## TECHNICAL FIELD

This application relates to the communications field, and in particular, to a data transmission method, a network device, a communications device, and a storage medium.

## BACKGROUND

With the development of communications technologies, an internet of vehicles technology based on a cellular network is proposed in a 3rd generation partnership project (3rd Generation Partnership Project, 3GPP). The internet of vehicles technology provides intelligent transportation services such as vehicle to vehicle (Vehicle to Vehicle, V2V), vehicle to pedestrian (Vehicle to Pedestrian, V2P), vehicle to infrastructure (Vehicle to Infrastructure, V2I), and vehicle to network (Vehicle to Network, V2N). V2N communication is performed through uplink and downlink. V2V communication, V2P communication, and V2I communication are performed through sidelink. Sidelink communication is defined based on direct communication between communications devices, and communication between the communications devices does not need to be forwarded by a base station.

In the prior art, when the communications device needs to send data, the communications device sends a scheduling request to a network device. The network device receives the scheduling request sent by the communications device, and generates scheduling grant information based on the received scheduling request. Then, the network device sends the scheduling grant information to the communications device. The communications device sends the to-be-sent data based on the scheduling grant information, where the scheduling grant information includes a time frequency resource allocated to the communications device.

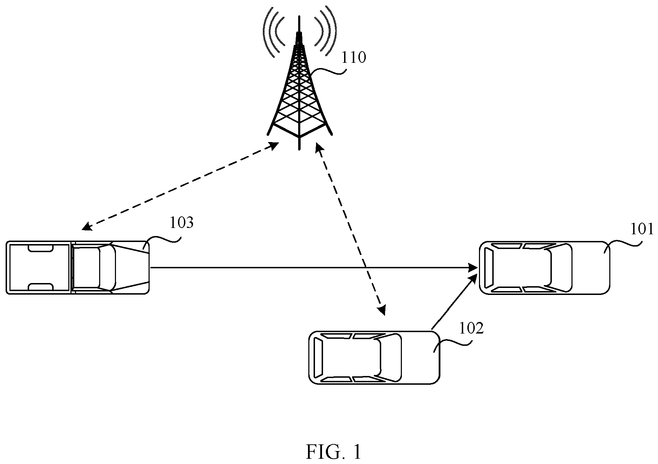

When the network device allocates a same time domain resource to a plurality of communications devices, the plurality of communications devices send data to a communications device on the same time domain resource, resulting in mutual interference between the data. In particular, data sent by a communications device close to a receive end causes relatively strong interference to data sent by a communications device far from the receive end. FIG. 1 is used as an example for description. In FIG. 1, a communications device 101, a communications device 102, a communications device 103, and a network device 110 are used as an example. The communications device 102 is relatively close to the communications device 101, and the communications device 103 is relatively far from the communications device 101. When the network device 110 allocates a same time domain resource to the communications device 102 and the communications device 103, and the communications device 102 and the communications device 103 send data on the same time domain resource, the data sent by the communications device 102 may cause relatively strong interference to the data sent by the communications device 103. Consequently, a decoding ratio of the communications device 101 for the data sent by the communications device 103 is reduced.

## SUMMARY

Embodiments of this application provide a data transmission method, a network device, a communications device, and a storage medium, to reduce mutual interference between data sent by a plurality of communications devices when the plurality of communications devices send the data to a communications device.

According to a first aspect, an embodiment of this application provides a data transmission method. The method includes: A network device determines a time window of a target communications device group, where the target communications device group includes at least two communications devices, a distance between two communications devices in the target communications device group is less than or equal to a threshold, and the time window is used to enable the at least two communications devices in the target communications device group to send and receive data in the time window through sidelink. The network device sends first indication information to the at least two communications devices in the target communications device group, where the first indication information is used to indicate the time window.

In this embodiment of this application, because the distance between the two communications devices in the target communications device group is less than or equal to a distance threshold, the at least two communications devices in the target communications device group are relatively close to a communications device used as a receive end. In this way, mutual interference that is between the data sent by the at least two communications devices in the target communications device group and that is mentioned in the background can be avoided when there is a relatively large difference between distances from communications devices that send data in a same time window to the communications device used as the receive end, thereby improving a decoding ratio of the communications device used as the receive end for the data sent by the at least two communications devices in the target communications device group.

In a possible implementation, the time window includes N time units, and the N time units include K first time units and L second time units, where N is an integer greater than or equal to 2, K is an integer greater than or equal to 1, and L is an integer greater than or equal to 1 and less than or equal to (N-K). The first indication information includes at least two patterns, each of the at least two patterns includes a combination of the K first time units and the L second time units, and the at least two patterns has different combination forms of the K first time units and the L second time units. The network device sends a first pattern to a first communications device, and sends a second pattern to a second communications device, where the first pattern is used to indicate the first communications device to send first data on K first time units included in the first pattern, the second pattern is used to indicate the second communications device to receive the first data on at least one of L second time units included in the second pattern, both the first pattern and the second pattern belong to the at least two patterns, and both the first communications device and the second communications device belong to the target communications device group.

In this embodiment of this application, the network device sends the first pattern to the first communications device, and sends the second pattern to the second communications device. The first communications device sends the first data on the K first time units included in the first pattern, and the second communications device receives the first data on the at least one of the L second time units included in the second pattern. Therefore, in a time window, the first communications device and the second communications device can implement a full-duplex effect. Further, both the first communications device and the second communications device belong to the target communications device group. Therefore, according to this embodiment of this application, in a time window, data sent by any communications device in the target communications device group can be received by another communications device in the group. In other words, in a time window, any communications device can receive data sent by another communications device in a communications device group.

In a possible implementation, the network device may determine the target communications device group based on parameter information of the at least two communications devices, where the parameter information may include but is not limited to location information of the at least two communications devices.

In a possible implementation, the network device may determine the time window of the target communications device group based on a quantity of communications devices included in the target communications device group.

In a possible implementation, to ensure that a determined pattern of a communications device can meet a service requirement of the communications device, locations of the K first time units in the first pattern may be determined based on a service delay requirement of the first communications device, and locations of K first time units in the second pattern may be determined based on a service delay requirement of the second communications device. For the at least two communications devices in the target communications device group, a first time unit included in a pattern corresponding to a communications device with a small service delay is located before a first time unit included in a pattern corresponding to a communications device with a large service delay. In this way, the communications device with a small service delay can send to-be-sent data relatively quickly, to meet processing requirements of the communications device for different services.

According to a second aspect, an embodiment of this application provides a data transmission method. The method includes: A first communications device receives first indication information sent by a network device, where the first indication information is used to indicate a time window, the time window is determined by the network device for a target communications device group, the target communications device group includes at least two communications devices, a distance between two communications devices in the target communications device group is less than or equal to a threshold, and the first communications device is any one in the target communications device group. The first communications device sends and receives data in the time window.

In this embodiment of this application, the at least two communications devices in the target communications device group are relatively close to a communications device used as a receive end. Therefore, data sent by another communications device in the target communications device group causes relatively small interference to the data sent by the first communications device, thereby improving a decoding ratio of the communications device used as the receive end for the data sent by the first communications device. In addition, when the first communications device receives the data in the time window, because the distance between the two communications devices in the target communications device group is less than or equal to a distance threshold, the another communications device in the target communications device group is relatively close to the first communications device used as the receive end. In this way, mutual interference between data sent by the communications devices can be avoided when there is a relatively large difference between distances from communications devices that send data in a same time window to the receive end, thereby improving a decoding ratio of the first communications device.

In a possible implementation, the time window includes N time units, and the N time units include K first time units and L second time units, where N is an integer greater than or equal to 2, K is an integer greater than or equal to 1, and L is an integer greater than or equal to 1 and less than or equal to (N-K). The first indication information includes at least two patterns, each of the at least two patterns includes a combination of the K first time units and the L second time units, and the at least two patterns has different combination forms of the K first time units and the L second time units. The first communications device receives a first pattern sent by the network device, and then the first communications device sends first data on K first time units included in the first pattern, and receives second data on at least one of L second time units included in the first pattern, where the second data is sent by a second communications device on K first time units included in a second pattern, both the first pattern and the second pattern belong to the at least two patterns, and the second communications device is one in the target communications device group other than the first communications device.

In this embodiment of this application, the first communications device sends the first data on the K first time units included in the first pattern of the first communications device, and the second communications device receives the first data on the at least one of the L second time units included in the second pattern of the second communications device. The second communications device sends the second data on the K first time units included in the second pattern, and the first communications device receives the second data on the at least one of the L second time units included in the first pattern. In this way, the first data sent by the first communications device can be received by the second communications device in a time window. Correspondingly, the second data sent by the second communications device is also received by the first communications device in a time window. Therefore, in a time window, the first communications device and the second communications device can implement a full-duplex effect.

In a possible implementation, to help the communications device used as the receive end (for example, the second communications device) determine whether to continue to wait to receive the first data in the time window or stop data receiving in the time window, the first communications device may send second indication information on the K first time units included in the first pattern, where the second indication information is used to indicate a location, in the K first time units included in the first pattern, of a current first time unit on which the first data is sent and that is included in the first pattern. Optionally, when the location, in the K first time units included in the first pattern, of the current first time unit on which the first data is sent and that is included in the first pattern is a last location, the communications device used as the receive end may stop data transmission in the time window; or when the location, in the K first time units included in the first pattern, of the current first time unit on which the first data is sent and that is included in the first pattern is not a last location, the communications device used as the receive end may continue to wait to receive the first data subsequently sent by the first communications device.

In a possible implementation, the first communications device receives third indication information, where the third indication information is used to indicate a location, in the K first time units included in the second pattern, of a current first time unit on which the second data is sent and that is included in the second pattern. When the first communications device fails to decode the second data, and determines that the location that is of the current first time unit included in the second pattern and that is indicated by the third indication information is not a last one in the K first time units included in the second pattern, the first communications device receives the second data sent by the second communications device on a next first time unit in the second pattern, where the next first time unit is in the K first time units included in the second pattern and locates after the current first time unit that is included in the second pattern and that is indicated by the third indication information. The first communications device performs combined decoding on the second data received twice. In a possible implementation, when the combined decoding performed by the first communications device fails, the step in which the first communications device receives the second data sent by the second communications device on the next first time unit included in the second pattern is returned until the decoding succeeds or until the first communications device determines that the location of the current first time unit that is included in the second pattern and that is used to send the second data is the last one in the K first time units included in the second pattern.

The third indication information indicates the location, in the K first time units included in the second pattern, of the current first time unit on which the second data is sent and that is included in the second pattern, so that the first communications device can quickly determine, based on the location, whether to wait to receive the second data subsequently sent by a second device or stop data transmission in the time window, thereby reducing resources of the first communications device.

According to a third aspect, an embodiment of this application provides a network device. The network device includes a memory, a transceiver, and a processor, where the memory is configured to store an instruction; the processor is configured to execute the instruction stored in the memory, and control the transceiver to receive a signal and send a signal; and when the processor executes the instruction stored in the memory, the network device is configured to perform the first aspect or any method in the first aspect.

According to a fourth aspect, an embodiment of this application provides a communications device. The communications device includes a memory, a transceiver, and a processor, where the memory is configured to store an instruction; the processor is configured to execute the instruction stored in the memory, and control the transceiver to receive a signal and send a signal; and when the processor executes the instruction stored in the memory, the communications device is configured to perform the second aspect or any method in the second aspect.

According to a fifth aspect, an embodiment of this application provides a network device. The network device is configured to implement the first aspect or any method in the first aspect, and includes corresponding functional modules respectively configured to implement steps in the foregoing method. The function may be implemented by hardware, or may be implemented by hardware executing corresponding software. The hardware or the software includes one or more modules corresponding to the foregoing function. In a possible implementation, a structure of the network device includes a processing unit and a transceiver unit. These units may perform corresponding functions in the foregoing method example. For details, refer to detailed descriptions in the method example. Details are not described herein again.

According to a sixth aspect, an embodiment of this application provides a communications device. The communications device is configured to implement the second aspect or any method in the second aspect, and includes corresponding functional modules respectively configured to implement steps in the foregoing method. The function may be implemented by hardware, or may be implemented by hardware executing corresponding software. The hardware or the software includes one or more modules corresponding to the foregoing function. In a possible implementation, a structure of the communications device includes a processing unit and a transceiver unit. These units may perform corresponding functions in the foregoing method example. For details, refer to detailed descriptions in the method example. Details are not described herein again.

According to a seventh aspect, an embodiment of this application provides a computer storage medium. The computer storage medium stores an instruction, and when the instruction is run on a computer, the computer is enabled to perform the method according to any one of the first aspect or the possible implementations of the first aspect, or the computer is enabled to perform the method according to any one of the second aspect or the possible implementations of the second aspect.

According to an eighth aspect, an embodiment of this application provides a computer program product including an instruction. When the computer program product runs on a computer, the computer is enabled to perform the method according to any one of the first aspect or the possible implementations of the first aspect, or the computer is enabled to perform the method according to any one of the second aspect or the possible implementations of the second aspect.

**BRIEF DESCRIPTION OF DRAWINGS**

FIG. 1 is a schematic architectural diagram of a communications system in the prior art;
FIG. 2 is a schematic architectural diagram of a communications system according to this application;
FIG. 3 is a schematic flowchart of a data transmission method according to this application;
FIG. 4 is a schematic structural diagram of a time window according to an embodiment of this application;
FIG. 5(a) is a schematic structural diagram of a pattern according to this application;
FIG. 5(b) is a schematic structural diagram of another pattern according to this application;
FIG. 5(c) is a schematic structural diagram of another pattern according to this application;
FIG. 6A and FIG. 6B are a schematic flowchart of another data transmission method according to this application;
FIG. 7 is a schematic structural diagram of a network device according to this application;
FIG. 8 is a schematic structural diagram of a network device according to this application;
FIG. 9 is a schematic structural diagram of a communications device according to this application; and
FIG. 10 is a schematic structural diagram of a communications device according to this application.

**DESCRIPTION OF EMBODIMENTS**

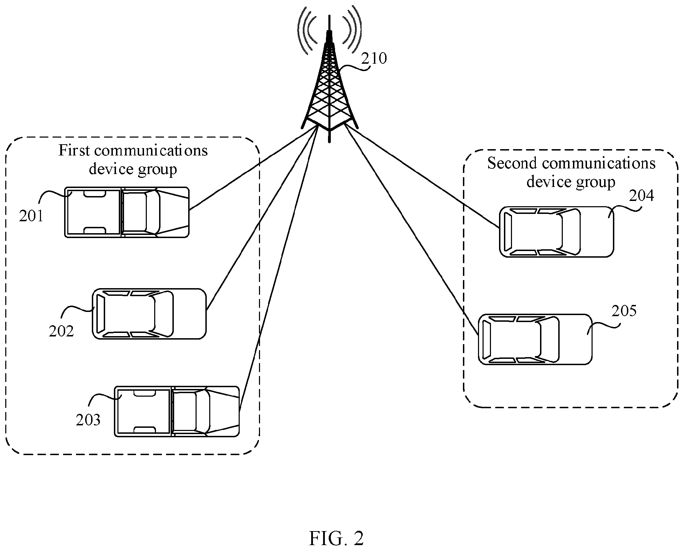

FIG. 2 is a schematic architectural diagram of a communications system according to an embodiment of this application. The communications system may include a network device and a communications device. In FIG. 2, an example in which the communications system includes one network device and five communications devices is used for description. As shown in FIG. 2, the communications system includes a network device 210, a communications device 201, a communications device 202, a communications device 203, a communications device 204, and a communications device 205. The network device 210 communicates with all of the communications device 201, the communications device 202, the communications device 203, the communications device 204, and the communications device 205 in a wireless manner, and mainly performs transmission by using a Uu interface. The communications device 201, the communications device 202, the communications device 203, the communications device 204, and the communications device 205 may communicate with each other in a wireless manner, and mainly performs transmission by using a sidelink (Sidelink, SL) interface. For example, communication between V2V, V2P, and V2I in a V2X communications system may be directly performed through sidelink, or another device-to-device (device-to-device, D2D) communication may be performed through sidelink. The sidelink is defined based on direct communication between communications devices, that is, communication between the communications devices does not need to be forwarded by a base station. The communications system in embodiments of this application may be a universal mobile telecommunications system (universal mobile telecommunications system, UMTS), a long term evolution (long term evolution, LTE) wireless communications system, a 5th generation (5th generation, 5G) mobile communications system, or the like.

The network device may be a macro evolved NodeB (evolved node B, eNB) in the UMTS, may be a macro base station eNB in the LTE wireless communications system, or may be a base station gNB in the 5G mobile communications system. The gNB may be used as a macro base station or a micro base station. A networking mode of the network device may be a macro/micro heterogeneous network HetNet, a new radio access network (Radio Access Network, C-RAN), a distributed scenario, or the like. The C-RAN is a green radio access network architecture (clean system) based on centralized processing (centralized processing), collaborative radio (collaborative radio), and real-time cloud infrastructure (real-time cloud infrastructure). In different networking modes, for example, in HetNet networking, the network device may be a micro base station, a pico base station, or a home NodeB; in C-RAN networking, the network device may be a baseband processing unit pool (building base band unit pool, BBU pool) and a radio frequency unit RRU; and in a distributed base station scenario, the network device may be a baseband processing unit (building base band unit, BBU) and a radio frequency unit (Radio Remote Unit, RRU).

The communications device may be a mobile phone, a tablet computer, a vehicle with a communication function, roadside infrastructure with a communication function, or the like. In FIG. 2, a distance between the communications device 201 and the communications device 202, a distance between the communications device 201 and the communications device 203, a distance between the communications device 202 and the communications device 203, and a distance between the communications device 204 and the communications device 205 are all less than or equal to a threshold. A distance between the communications device 201 and the communications device 204 and a distance between the communications device 201 and the communications device 205 are both greater than the threshold. A distance between the communications device 202 and the communications device 204 and a distance between the communications device 202 and the communications device 205 are both greater than the threshold. A distance between the communications device 203 and the communications device 204 and a distance between the communications device 203 and the communications device 205 are both greater than the threshold. In a possible implementation, the communications device 201, the communications device 202, and the communications device 203 may be located in an area, the communications device 204 and the communications device 205 may be located in another area, and a distance between the two areas is greater than the threshold.

It should be understood that, the terms "first", "second", and the like in the embodiments of this application are intended to distinguish between similar objects, but do not necessarily indicate a specific order or sequence. The term "and/or" is used to describe an association relationship between associated objects, and indicates that three relationships may exist. For example, "A and/or B" may represent the following three cases: Only A exists, only B exists, and both A and B exist, where A and B may be singular or plural.

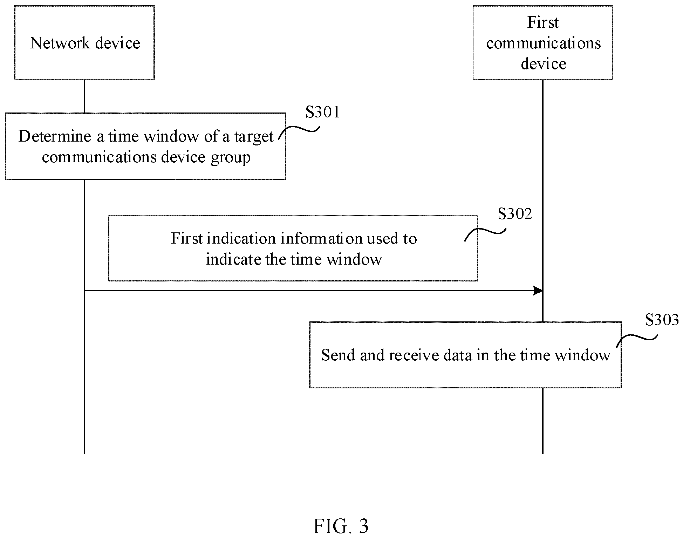

Based on the foregoing content, FIG. 3 is a schematic flowchart of a data transmission method according to an embodiment of this application. In this embodiment, a network device may be the network device 210 in FIG. 2, and a target communications device group may be either of a first communications device group and a second communications device group in FIG. 2. When the target communications device group is the first communications device group in FIG. 2, at least two communications devices in the target communications device group may be at least two of the communications device 201, the communications device 202, and the communications device 203 in FIG. 2; or when the target communications device group is the second communications device group in FIG. 2, at least two communications devices in the target communications device group may be the communications device 204 and the communications device 205 in FIG. 2. As shown in FIG. 3, the method includes the following steps.

Step S301: The network device determines a time window of the target communications device group.

It can be learned from the foregoing description that, the target communications device group includes the at least two communications devices, and a distance between any two of the at least two communications devices in the target communications device group is less than or equal to a threshold. The threshold may be pre-determined based on an empirical value. The time window is used to enable the at least two communications devices in the target communications device group to send and receive data in the time window through sidelink.

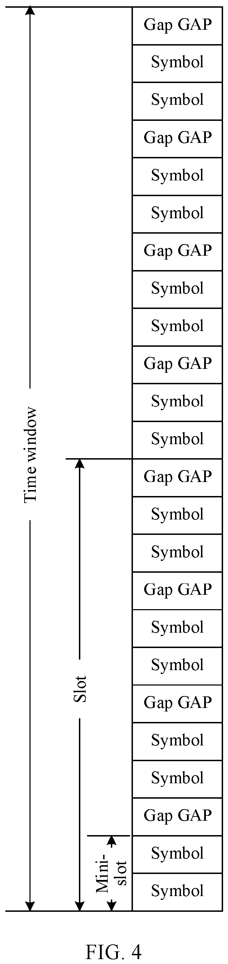

Optionally, the time window may indicate a time length, and is used to identify a time length allocated by the network device to the communications device for receiving and sending data. Optionally, the time window may also be referred to as a time length or a time domain resource. In a possible implementation, the time window includes N time units, where N is an integer greater than or equal to 2. The time unit includes but is not limited to a frame, a subframe, a slot, a mini-slot, an orthogonal frequency division multiplexing (Orthogonal frequency division multiplex, OFDM) symbol, or the like. There is an association relationship between the frame, the subframe, the slot, the mini-slot, and the symbol. For example, if an extended cyclic prefix (extended cyclic prefix, ECP) is used in a slot defined in 5G new radio (new radio, NR), one mini-slot includes two symbols, and there may be a gap GAP between two adjacent mini-slots. The size of one gap may be a length of one OFDM symbol, and the gap is used to convert a transmit/receive function between the two adjacent mini-slots. Therefore, one slot includes four mini-slots, in other words, one slot includes 12 symbols. FIG. 4 is a schematic structural diagram of a time window according to an embodiment of this application. A time unit of the time window is described by using a mini-slot as an example. As shown in FIG. 4, the time window includes eight mini-slots. One slot includes four mini-slots, and there is a gap between two adjacent mini-slots and the gap is used for conversion between data reception and data transmission. In FIG. 4, when the gap is a symbol, the slot includes 12 symbols, and the time window includes 24 symbols. In a possible implementation, if the network device has relatively high performance, for example, has a relatively small transmit/receive conversion delay or uses two or more wireless transmission channels, duration of the gap may be less than one symbol, or may be directly omitted.

Step S302: The network device sends first indication information to the at least two communications devices in the target communications device group, where the first indication information is used to indicate the time window. Correspondingly, a first communications device receives the first indication information sent by the network device.

The network device may send the first indication information to the at least two communications devices in the target communications device group in the following two manners.

In a first implementation, when sending scheduling grant information to the at least two communications devices in the target communications device group, the network device includes the first indication information in downlink control information (downlink control information, DCI). The scheduling grant information includes frequency domain resources, modulation and coding schemes, and the like that are allocated to the at least two communications devices in the target communications device group. Optionally, the network device may send the DCI to the communications device by using a new radio-physical downlink control channel (new radio-physical downlink control channel, NR-PDCCH).

In a second implementation, after determining the time window of the target communications device group, the network device may include the first indication information in radio resource control (radio resource control, RRC) information, and directly send the first indication information to the at least two communications devices in the target communications device group. The RRC includes control channel information, transmission channel information, protocol stack information, and the like that are configured for the at least two communications devices in the target communications device group.

For example, the first indication information may be a field newly added to a DCI message or an RRC message, and the field is used to identify the first indication information.

The first communications device is a communications device in the target communications device group. With reference to FIG. 2, when the target communications device group is the first communications device group, the first communications device may be one of the communications device 201, the communications device 202, and the communications device 203; or when the target communications device group is the second communications device group, the first communications device group may be either of the communications device 204 and the communications device 205.

Step S303: The first communications device sends and receives the data in the time window.

In this embodiment of this application, it can be learned from step S301 to step S304 that, the network device sends the first indication information to the at least two communications devices in the target communications device group, and the at least two communications devices in the target communications device group send and receive, through sidelink, the data in the time window indicated by the first indication information. Because the distance between the two communications devices in the target communications device group is less than or equal to a distance threshold, the at least two communications devices in the target communications device group are relatively close to a communications device used as a receive end. In this way, mutual interference that is between the data sent by the at least two communications devices in the target communications device group and that is mentioned in the background can be avoided when there is a relatively large difference between distances from communications devices that send data in a same time window to the communications device used as the receive end, thereby improving a decoding ratio of the communications device used as the receive end for the data sent by the at least two communications devices in the target communications device group.

Further, because the distance between the two communications devices in the target communications device group is less than or equal to the threshold, another communications device in the target communications device group is relatively close to the first communications device in the target communications device group, so that a decoding ratio of the first communications device for data sent by the another communications device may also be improved.

Before step S301, the communications device used as the receive end may receive, in the time window, data sent by a plurality of communications devices. To minimize mutual interference between the data sent by the plurality of communications devices and improve the decoding ratio of the communications device used as the receive end, the network device may group the communications devices in advance. This embodiment of this application provides two implementations in which the network device determines a communications device group.

Implementation 1: The network device obtains parameter information, for example, location information, of the at least two communications devices, and performs grouping based on the location information of the at least two communications devices. With reference to FIG. 2, the network device 210 obtains location information of the communications device 201, the communications device 202, the communications device 203, the communications device 204, and the communications device 205, and groups, based on the obtained location information of the communications devices, a communications device whose distance from another communications device is less than or equal to the threshold among the communications devices into one group. To be specific, the network device 210 may determine the communications device 201, the communications device 202, and the communications device 203 as the first communications device group (as shown in FIG. 2), and determine the communications device 204 and the communications device 205 as the second communications device group (as shown in FIG. 2). Optionally, a location of a communications device may change with time. To improve grouping accuracy, the network device may perform grouping based on current location information of the at least two communications devices.

Implementation 2: The network device may obtain current service delay requirements of the at least two communications devices, and perform grouping based on location information and the service delay requirements of the at least two communications devices, to ensure that the communications devices in the determined communications device group have relatively close service delay requirements, so that service requirements of the communications devices can be met when the network device schedules all the communications devices for communication transmission. With reference to FIG. 2, when the network device determines that the distance between the communications device 201 and the communications device 202, the distance between the communications device 201 and the communications device 203, and the distance between the communications device 202 and the communications device 203 are all less than or equal to the threshold, and determines that service delay requirements of the communications device 201, the communications device 202, and the communications device 203 are all within a first preset range, the communications device 201, the communications device 202, and the communications device 203 are determined as the first communications device group (as shown in FIG. 2); or when the network device determines that the distance between the communications device 204 and the communications device 205 is less than or equal to the threshold, and determines that service delay requirements of the communications device 204 and the communications device 205 are both within a second preset range, the communications device 204 and the communications device 205 are determined as the second communications device group (as shown in FIG. 2).

In a possible implementation, when the network device determines that the distance between the communications device 201 and the communications device 202, the distance between the communications device 201 and the communications device 203, and the distance between the communications device 202 and the communications device 203 are all less than or equal to the threshold, and determines that service delay requirements of the communications device 201 and the communications device 202 are both within a first preset range and that a service delay requirement of the communications device 203 is within a third preset range, the communications device 201 and the communications device 202 are determined as the first communications device group, and the communications device 203 is determined as a third communications device group. In other words, one communications device may alternatively belong to two or more different communications device groups.

In the foregoing implementation 1, the network device obtains the location information of the at least two communications devices by using different methods. In a possible application scenario, the communications devices may periodically report the location information to the network device, and the network device periodically receives the location information reported by the communications devices. In the application scenario, after receiving the location information reported by the communications devices, the network device may group the communications devices in advance. In another possible application scenario, the network device may trigger the communications device to include the location information in a measurement report message for sending to the network device, and the network device groups the communications devices based on the location information carried in the received measurement report message.

In the foregoing implementation 2, in different scenarios, the network device obtains the location information and the service delay requirements of the at least two communications devices by using different methods. When the communications devices have relatively fixed location information and/or relatively fixed service delay requirements, the communications devices may periodically report the location information to the network device, and send the service delay requirements to the network device when services are triggered. For example, the communications devices are vehicles moving at a relatively fixed speed and/or having a same V2X service on a road. In a scenario in which the communications device has a plurality of service delay requirements, for example, when the communications device simultaneously activates a plurality of V2X services such as a 3 ms short-delay service and a 100 ms long-delay service, and different service delay requirements may be scheduled each time, the communications device may include the service delay requirements in a scheduling request and send the scheduling request to the network device. The communications device may include, in a measurement report message, received location information sent by the network device, and then send the location information to the network device. In this way, accuracy of determining the communications device group by the network device can be improved, and the communications devices in the determined communications device group can meet the service requirements as much as possible.

In the foregoing step S301, the network device may determine the time window of the target communications device group based on a quantity of communications devices in the target communications device group. Generally, a larger quantity of communications devices in the target communications device group indicates a larger to-be-configured time window. To ensure that the determined time window can meet the service delay requirements of the communications devices in the target communications device group as much as possible, the network device may determine the time window of the target communications device group based on the quantity of communications devices in the target communications device group and the service delay requirements of the communications devices. In other words, when target communications device groups include a same quantity of communications devices, a relatively small time window is configured for a target communications device group having a small service delay requirement, and a relatively large time window is configured for a target communications device group having a large service delay requirement. In this way, service requirements of the communications devices in the communications device group can be met. For example, a communications device that needs to process an emergency service has a relatively small time window, so that the communications device can quickly send the emergency service.

In a possible implementation, a change in the location information and/or the service delay requirement of the communications device in the target communications device group or a change in surrounding interference of the communications device and a channel state results in a change in the time window that is of the at least two communications devices in the target communications device group and that is determined by the network device. Therefore, the time window of the target communications device group needs to be re-determined. With reference to FIG. 2, when the network device determines, based on the location information of the communications device 201, that the communications device 201 moves from the first communications device group to the second communications device group, the network device determines the changed communications device 201 as a communications device in the second communications device group, and needs to re-determine a time window of the changed second communications device group and a time window of the changed first communications device group. Alternatively, when the network device determines, based on the location information and the service delay requirement of the communications device, that the communications device moves from the first communications device group to the second communications device group, the network device determines the changed communications device as a communications device in the second communications device group, and re-determines a time window of the changed second communications device group and a time window of the changed first communications device group. Alternatively, when the network device determines, based on the surrounding interference of the communications device and the channel state, that the communications device moves from the first communications device group to the second communications device group, the network device determines the changed communications device as a communications device in the second communications device group, and re-determines a time window of the changed second communications device group and a time window of the changed first communications device group.

In a possible implementation, the time window includes N time units, and the N time units include K first time units and L second time units, where N is an integer greater than or equal to 2, K is an integer greater than or equal to 1, and L is an integer greater than or equal to 1 and less than or equal to (N-K). Optionally, a quantity of first time units and a quantity of second time units included in the N time units may be determined in the following manner. The N time units include ⌊N/2⌋ first time units and (N−⌊N/2⌋) second time units. In other words, K may be determined as ⌊N/2⌋, and L may be determined as (N−⌊N/2⌋). Alternatively, the N time units may include ⌊N/2⌋ second time units and (N−⌊N/2⌋) first time units. In other words, L may be determined as ⌊N/2⌋, and K may be determined as (N−⌊N/2⌋).

In this embodiment of this application, the K first time units and the L second time units may be arranged and combined in different manners, to form different patterns. In other words, the pattern may indicate whether each of the N time units in the time window is used to send data or receive data. In a possible implementation, the time window includes N time units, and $C_N^{\lfloor N/2 \rfloor}$ patterns can be formed. Optionally, when the time window of the target communications device group is determined, a quantity of patterns that can be formed based on the determined time window needs to be greater than or equal to the quantity of communications devices in the target communications device group. In this way, in the target communications device group, one communications device can correspond to one pattern, so that the patterns of the communications devices in the target communications device group can meet: Data sent by any communications device on a first time unit of a corresponding pattern can be received by each of other communications devices in the target communications device group on at least one of second time units of a corresponding pattern.

Table 1 shows an example of a relationship between a quantity of time units in a time window and a quantity of patterns that can be formed according to an embodiment of this application. As shown in Table 1, when the time window includes two time units, two patterns can be formed. When the time window includes three time units, three patterns can be formed. When the time window includes four time units, six patterns can be formed. When the time window includes N time units, $C_N^{\lfloor N/2 \rfloor}$ patterns can be formed.

**Table 1 Relationship between a quantity of time units in a time window and a quantity of patterns that can be formed**

| N time units/time windows | Quantity of patterns that can be formed |
| --- | --- |
| 2 | 2 |
| 3 | 3 |
| 4 | 6 |
| ⋮ | ⋮ |
| N | $C_N^{\lfloor N/2 \rfloor}$ N |

In a possible implementation, a quantity of patterns may be determined based on the quantity of time units included in the time window, and the quantity of time units included in the time window may be determined based on the frequency domain resources configured by the network device for the communications devices in the target communications device group. In a possible implementation, the first indication information further includes frequency domain resource information, for example, a starting position and a length of a channel, a starting position and a length of a sub-channel, or a starting position and a length of a resource block (resource block, RB), so that the first communications device sends and receives, through sidelink, the data based on the time window and the configured frequency domain resources. The frequency domain resources in the first indication information may be indicated to the at least two communications devices in the target communications device group in a manner the same as a time window indication manner, for example, by adding a field to the RRC information or the DCI information. Details are not described herein again. Frequency domain resource information indicated in the RRC information is semi-static frequency domain resource information, and frequency domain resource information indicated in the DCI information is dynamic frequency domain resource information. If the communications devices do not receive the frequency domain resource information in DCI scheduling grant information, the data may be sent through sidelink by using the frequency domain resource information indicated in RRC; or if the communications devices receive updated frequency domain resource information in DCI scheduling grant information, the data may be sent through sidelink by using the frequency domain resource information indicated in the DCI.

After the time window is determined, the frequency domain resources corresponding to the at least two communications devices in the target communications device group may also be determined. In other words, determining of the time window is affected by the frequency domain resources configured by the network device for the communications devices. In other words, determining of the time window of the target communications device group by the network device is further related to the frequency domain resources configured by the network device for the target communications device group. For ease of description of the solution, using a 20 MHz system bandwidth as an example, the network device configures a sub-channel as four RBs, and each RB includes 12 subcarriers. Using a 15 kHz subcarrier spacing as an example, there may be a total of 110 RBs, namely, 27 sub-channels, in the 20 MHz system bandwidth. Assuming that to-be-transmitted data of each communications device may be carried on one sub-channel, and the 27 sub-channels may respectively carry to-be-transmitted data of 27 communications devices, the network device may determine, according to Table 1, that the time window of the target communications device group includes seven time units. If the to-be-transmitted data of each communications device needs to be carried on two sub-channels, and the 27 sub-channels may carry to-be-transmitted data of 13 communications devices, the network device may determine, according to Table 1, that the time window of the target communications device group includes six time units. In a scenario in which there is a relatively large difference between the volumes of the to-be-transmitted data of the communications devices, a network may alternatively determine, based on the volume of the to-be-transmitted data of each communications device, a quantity of communications devices that can be scheduled simultaneously, and then determine the quantity of time units included in the time window of the target communications device group. Further, the network device may obtain transmission channel state information. The network device may determine, based on the volumes of the to-be-transmitted data of the communications devices and transmission channel information, the quantity of communications devices that can be scheduled simultaneously, and then determine the time window of the target communications device group.

For ease of understanding of the solution, this embodiment of this application is described by using an example of patterns that can be formed when the time window includes three time units (that is, N=3). When the time window includes the three time units, three patterns can be formed. When the time window includes three time units, the patterns can be formed in two cases. In a first case, K=$\lfloor$N/2$\rfloor$=1, and L=N-$\lfloor$N/2$\rfloor$=2. In other words, the time window including the three time units includes one first time unit and two second time units. In the first case, the three patterns meet: One first time unit in any pattern corresponds to at least one second time unit in each of the remaining two patterns. In a second case, L=⌊N/2⌋=1, and K=N-⌊N/2⌋=2. The time window including the three time units includes two first time units and one second time unit. In the second case, the three patterns meet: At least one of the two first time units in any pattern corresponds to one second time unit in each of the remaining two patterns. Optionally, the first time unit may be represented by 1, and the second time unit may be represented by 0. In this case, the patterns formed in the first case may be represented by 100, 010, and 001, and the patterns formed in the second case may be represented by 110, 101, and 011. In other words, when the quantity N of time units included in the time window is an odd number, the patterns can be formed in two cases. For the target communications device group, the patterns allocated to the at least two communications devices in the target communications device group are formed in either of the cases.

In a possible implementation, when the quantity N of time units included in the time window is an even number, a quantity of first time units is the same as a quantity of second time units. Table 2 shows an example of patterns that can be formed when the time window includes eight time units according to an embodiment of this application. As shown in Table 2, the time window including the eight time units includes four first time units and four second time units. The first time unit is represented by 1, and the second time unit is represented by 0. When the time window includes the eight time units, a total of 70 patterns can be formed. The 70 patterns meet: At least one of the four first time units in any pattern corresponds to at least one second time unit in each of the remaining 69 patterns.

**Table 2 Patterns that can be formed when a time window includes eight time units**

| Pattern that can be formed | | | | | | |
|---|---|---|---|---|---|---|
| 11110000 | 01110010 | 11001010 | 00101110 | 01101010 | 10110100 | 10001011 |
| 11101000 | 01110001 | 11001001 | 00010111 | 01101001 | 10110010 | 10001101 |
| 11100100 | 11001100 | 11000110 | 00011011 | 01100110 | 10110001 | 10001110 |
| 11100010 | 10010101 | 11000101 | 00111100 | 01100101 | 01111000 | 01000111 |
| 11100001 | 10010011 | 11000011 | 00111010 | 01100011 | 01110100 | 01001011 |
| 11011000 | 01101100 | 10101100 | 10011010 | 01011100 | 00011110 | 01001101 |
| 11010100 | 00110101 | 10101010 | 10011001 | 01011010 | 00111001 | 01001110 |
| 11010010 | 00110011 | 10101001 | 10010110 | 01011001 | 00110110 | 00100111 |
| 11010001 | 10000111 | 10100110 | 01010011 | 01010110 | 10100011 | 00101011 |
| 10111000 | 00011101 | 10100101 | 10011100 | 01010101 | 00101101 | 00001111 |

In a possible implementation, one time window corresponds to one pattern table. N pattern tables can be formed based on N time windows in Table 1. To enable the network device to quickly determine a pattern, and reduce the volume of data sent by the network device to a communications device, the network device may add an index number to each pattern, and each index number may be used to uniquely determine a pattern. In a possible implementation, an index number may be added before each pattern in each pattern table. Optionally, a form of an index number may be N-m, where N represents a pattern table corresponding to the time units included in the time window, and m represents an $m^{th}$ pattern in the pattern table corresponding to the time window. For example, in 8-1, 8 represents a pattern table corresponding to the eight time units included in the time window, and 1 represents a first pattern in the pattern table corresponding to the eight time units. That is, an index number 8-1 represents the first pattern in the pattern table corresponding to the eight time units included in the time window. Optionally, the index number 8-1 may be added before 11110000 in Table 2, to indicate a pattern 11110000 by using the index number 8-1.

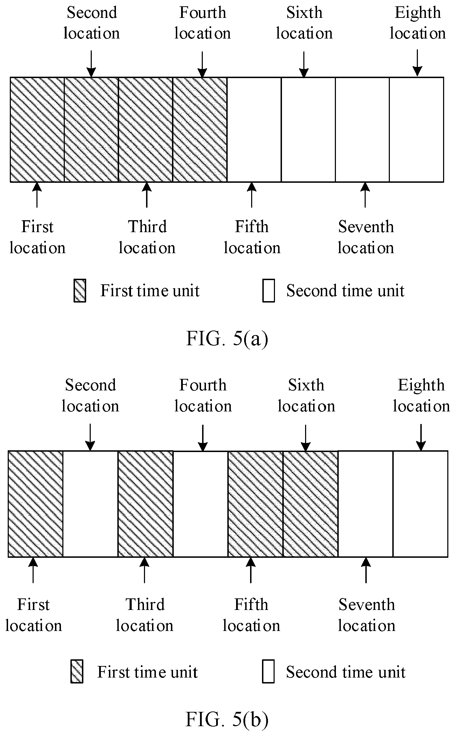

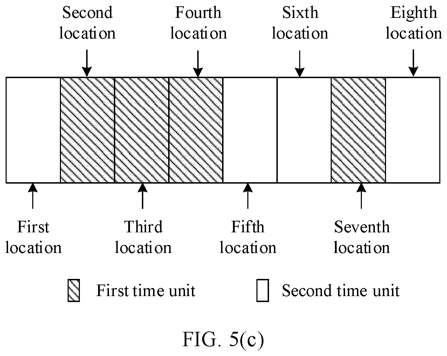

Based on the patterns shown in Table 2, FIG. 5(a), FIG. 5(b), and FIG. 5(c) are schematic diagrams of three different patterns according to an embodiment of this application. In FIG. 5(a), FIG. 5(b), and FIG. 5(c), shaded parts represent first time units, and the first time units are used to send data; and non-shaded parts represent second time units, and the second time units are used to receive data. A pattern shown in FIG. 5(a) may be represented by 11110000. The four first time units are all located before the four second time units. In other words, the first four first time units are all used to send the data, and the last four second time units are all used to receive the data. A pattern shown in FIG. 5(b) may be represented by 10101100. Time units located at a first location, a third location, a fifth location, and a sixth location are all first time units, and time units located at a second location, a fourth location, a seventh location, and an eighth location are all second time units. In other words, in the pattern shown in FIG. 5(b), the first time units located at the first, third, fifth, and sixth locations are used to send the data, and the second time units located at the second, fourth, seventh, and eighth locations are used to receive the data. A pattern shown in FIG. 5(c) may be represented by 01110010. Time units located at a first location, a fifth location, a sixth location, and an eighth location are all second time units, and time units located at a second location, a third location, a fourth location, and a seventh location are all first time units. In other words, in the pattern shown in FIG. 5(c), the first time units located at the second, third, fourth, and seventh locations are used to send the data, and the second time units located at the first, fifth, sixth, and eighth locations are used to receive the data.

This embodiment of this application provides an implementation in which the network device determines patterns of the at least two communications devices in the target communications device group. The network device may determine locations of the K first time units of the at least two communications devices based on the service delay requirements of the at least two communications devices in the target communications device group. A first time unit included in a pattern corresponding to a communications device with a smaller service delay is located before a first time unit included in a pattern corresponding to a communications device with a larger service delay.

For example, with reference to FIG. 2, FIG. 5(a), FIG. 5(b), and FIG. 5(c), the target communications device group is the first communications device group in FIG. 2. It is assumed that the network device determines that a relationship between the service delay requirements of the communications device 201, the communications device 202, and the communications device 203 in the target communications device group is: A service delay of the communications device 201 is less than a service delay of the communications device 202, and the service delay of the communications device 202 is less than a service delay of the communications device 203. In this case, in FIG. 5(a), FIG. 5(b), and FIG. 5(c), each first first time unit in the patterns shown in FIG. 5(a) and FIG. 5(b) is located at the first location, and a first first time unit in the pattern shown in FIG. 5(c) is located at the second location. Therefore, each first first time unit in the patterns shown in FIG. 5(a) and FIG. 5(b) is located before the first time unit in the pattern shown in FIG. 5(c). Further, a second first time unit in the pattern shown in FIG. 5(a) is located at the second location, and a second second time unit shown in FIG. 5(b) is located at the third location, that is, the second first time unit in the pattern shown in FIG. 5(a) is located before a second first time unit in the pattern shown in FIG. 5(b). Therefore, the pattern shown in FIG. 5(a) may be determined as a pattern of the communications device 201, the pattern shown in FIG. 5(b) may be determined as a pattern of the communications device 202, and the pattern shown in FIG. 5(c) may be determined as a pattern of the communications device 203. It can be determined from FIG. 5(a), FIG. 5(b), and FIG. 5(c) that, at the first location of the time window, the communications device 201 and the communications device 202 are configured to send data, and the communications device 203 is configured to receive data. In this case, the communications device 203 may receive the data sent by the communications device 201 and the communications device 202. However, the communications device 201 and the communications device 202 work in a half-duplex mode (to be specific, the communications device 201 and the communications device 202 cannot receive data while sending data, or cannot send data while receiving data). Consequently, the communications device 201 and the communications device 202 cannot receive the data sent by the other party. At the second location of the time window, the communications device 201 and the communications device 203 are configured to send data, and the communications device 202 is configured to receive data. In this case, the communications device 202 may receive the data sent by the communications device 201. At the fifth location of the time window, the communications device 201 and the communications device 203 are configured to receive data, and the communications device 202 is configured to send data. In this case, the communications device 201 may receive the data sent by the communications device 202. Therefore, in a time window, the communications device 202, the communications device 202, and the communications device 203 may each receive the data sent by the other two parties. In this way, in a time window, the communications devices in the target communications device group implement a full-duplex effect.

Further, a communications device in the target communications device group may receive, for a plurality of times, data sent by another communications device in the target communications device group, thereby improving a decoding ratio of the communications device in the target communications device group. For example, the communications device 201 may receive, twice, that is, on the second time units at the fifth location and the sixth location, the data sent by the communications device 202; the communications device 202 may receive, twice, that is, on the second time units at the second location and the fourth location, the data sent by the communications device 201; and the communications device 203 may receive, for three times, that is, on the second time units at the first location, the fifth location, and the sixth location, the data sent by the communications device 202. Therefore, the communications device 201 receives, twice, the data sent by the communications device 202, thereby improving a decoding ratio for the data sent by the communications device 202; the communications device 202 receives, twice, the data sent by the communications device 201, thereby improving a decoding ratio for the data sent by the communications device 201; and the communications device 203 receives, for three times, the data sent by the communications device 202, thereby improving a decoding ratio of the data sent by the communications device 202.

In this embodiment of this application, the network device determines a pattern of each of the at least two communications devices in the target communications device group, and then sends the first indication information to the at least two communications devices in the target communications device group, where first indication information includes at least two patterns, each of the at least two patterns includes a combination of the K first time units and the L second time units, and the at least two patterns has different combination forms of the K first time units and the L second time units. In a possible implementation, the network device sends a first pattern to the first communications device, and sends a second pattern to a second communications device, where the first pattern is used to indicate the first communications device to send first data on the K first time units included in the first pattern, the second pattern is used to indicate the second communications device to receive the first data on at least one of the L second time units included in the second pattern, both the first pattern and the second pattern belong to the at least two patterns, and both the first communications device and the second communications device belong to the target communications device group.

In another possible implementation, the network device sends the first indication information to the at least two communications devices in the target communications device group, where the first indication information includes the patterns of the at least two communications devices in the target communications device group and communications device identifiers corresponding to the patterns, so that the communications devices in the target communications device group determine respective corresponding patterns.

In a possible implementation, the network device may pre-store a table (as shown in Table 1) of a relationship between a data volume of a time unit in a time window and a quantity of patterns that can be formed, and pattern tables that can be formed based on the time windows in Table 1. One time window may correspond to one pattern table that can be formed. Table 2 is one of the pattern tables. After determining the patterns of the at least two communications devices in the target communications device group, the network device includes the pattern of the communications device in the DCI message or the RRC message, and sends the DCI message or the RRC message to the communications device. Alternatively, the communications device may store tables that are the same as that of the network device. Pre-storage may be implemented through pre-configuration. Alternatively, pre-storage may be implemented as follows: When the communications device accesses a network, the network device broadcasts the locally stored two types of tables, and the communications device locally stores the two types of tables broadcast by the network device. Alternatively, the network device broadcasts rules used to generate the two types of tables, and the communications device generates the two types of tables according to the generation rules of the two types of tables, and locally stores the two types of tables. This is not limited in this embodiment of the present invention.

When determining the patterns of the at least two communications devices in the target communications device group, the network device may include, in the DCI message or the RRC message, an index number corresponding to the pattern of the communications device, and send the DCI message or the RRC message to the communications devices. For example, if the index number carried in the DCI message or the RRC message sent by the network device to the communications device is N-m, the communications device may determine, based on N-m, the $m^{th}$ pattern in the pattern table corresponding to the N time units included in the time window. For example, when the index number received by the communications device is 8-1, the communications device may determine, based on 8-1, the first pattern in the pattern table corresponding to the eight time units included in the time window. Therefore, the communications device may determine that the pattern is the pattern 11110000 in Table 2. The volume of the data transmitted by the network device to the communications device can be reduced by sending the index number of the pattern, thereby reducing air interface resources. Optionally, the communications device may uniquely determine a pattern based on the index number of the pattern. Optionally, the communications device stores the two types of tables, so that a corresponding time window and a pattern table that can be formed based on the time window may be determined based on the index number.

In this embodiment of this application, after determining the patterns of the at least two communications devices in the target communications device group, the network device may indicate, for a plurality of times, the pattern of the communications device in the target communications device group to the corresponding communications device. In other words, if to-be-sent data of a communications device includes N time units in a time window, and the N time units include K first time units and L second time units, the network device may schedule the communications device for K times, to be specific, indicate to use the K first time units to send the data for K times. When the communications device does not receive an indication indicating to send data, all the K first time units are used to receive the data. In addition, the network device needs to include indication information in the DCI message, to indicate that the first first time unit in the K first time units is a time unit used to send data, and the remaining (K-1) first time units are time units used to retransmit the data that has been transmitted on the first first time unit. When receiving the DCI message, the communications device cannot determine a time unit that is in the time window and that is used for new data transmission or data retransmission. Therefore, an identifier of the time unit used for new data transmission or data retransmission needs to be indicated in the DCI. In this way, the communications device can learn of time units used for new data transmission or time units used for data retransmission.

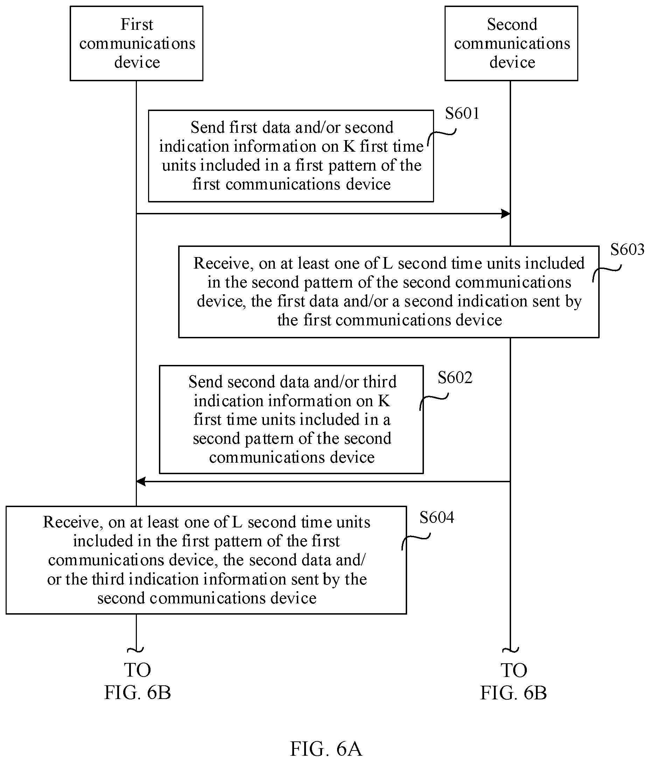

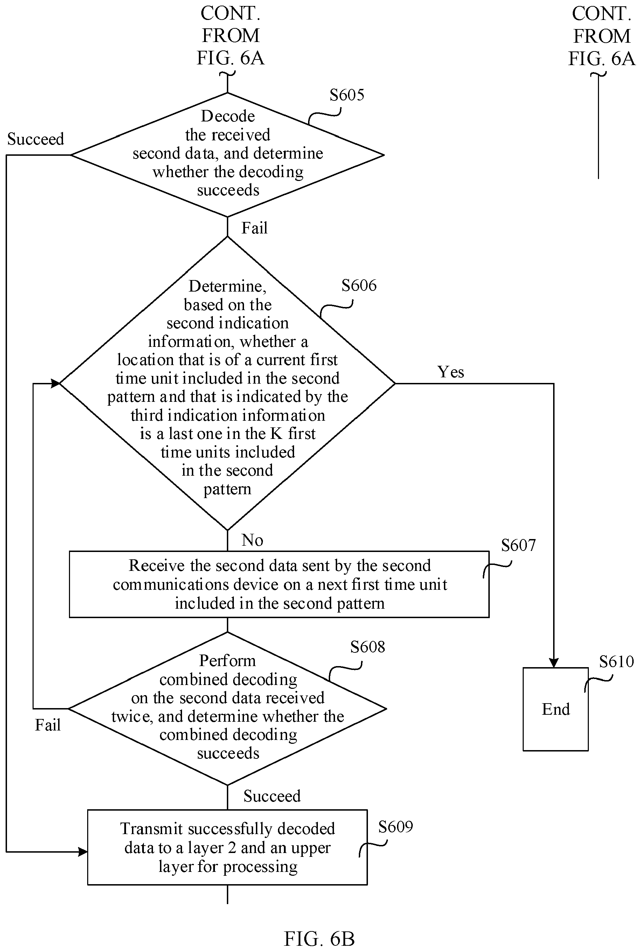

In this embodiment of this application, after the network device sends the first pattern to the first communications device in the communications device group, and sends the second pattern to the second communications device, the first communications device receives the first pattern, sends the data on the first time unit of the first pattern, and receives the data on the second time unit of first pattern. The second communications device receives the second pattern, sends the data on the first time unit of the second pattern, and receives the data on the second time unit of the second pattern. FIG. 6A and FIG. 6B are a schematic flowchart of another data transmission method according to an embodiment of this application. In this embodiment, when the target communications device group is the first communications device group in FIG. 2, the first communications device and the second communications device are two of the communications device 201, the communications device 202, and the communications device 203; or when the target communications device group is the second communications device group in FIG. 2, the first communications device and the second communications device are the communications device 204 and the communications device 205 in the second communications device group. Optionally, when the network device schedules only a communications device in the first communications device group, each communications device in the second communications device group listens to and receives data sent by another communications device group; or when the network device schedules only a communications device in the second communications device group, each communications device in the first communications device group listens to and receives data sent by another communications device group. As shown in FIG. 6A and FIG. 6B, the method includes the following steps.

Step S601: The first communications device sends first data and/or second indication information on K first time units included in a first pattern of the first communications device. The second indication information is used to indicate a location, in the K first time units included in the first pattern, of a current first time unit on which the first data is sent and that is included in the first pattern.

In a possible implementation, the first communications device receives, on a physical downlink control channel (physical downlink control channel, PDCCH), scheduling grant information that is sent by the network device and that is used by the first communications device to send and receive data through sidelink, and then generates scheduling assignment (scheduling assignment, scheduling assignment SA) information based on the scheduling grant information. To reduce the volume of data sent by the first communications device, the second indication information may be a field newly added to the SA, and the added field may indicate a location, in the K first time units included in the first pattern, of a current first time unit on which the first data is sent. In a possible implementation, the added field indicates whether the current first time unit on which the first data is sent is a first time unit at a last location in the K first time units. A bit may be used for indication. For example, 1 is used to indicate that the current first time unit on which the first data is sent is not the last first time unit in the pattern, or 0 is used to indicate that the current first time unit on which the first data is sent is the last first time unit in the pattern. In another possible implementation, the first communications device may send the second indication information while sending the first data.

In a possible implementation, the first communications device repeatedly sends, through sidelink, same first data on each of the K first time units included in the first pattern. The same first data may be same encoded data, or may be different encoded versions of same data that is independently decoded.

Step S602: The second communications device sends second data and/or third indication information on K first time units included in a second pattern of the second communications device. The third indication information is used to indicate a location, in the K first time units included in the second pattern, of a current first time unit on which the second data is sent and that is included in the second pattern. Alternatively, the third indication information may be a field newly added to the SA. An adding manner may be the same as the adding manner of the second indication information. Details are not described herein again.

In a possible implementation, the second communications device repeatedly sends, through sidelink, same second data on each of the K first time units included in the second pattern. The same second data may be same encoded data, or may be different encoded versions of same data that is independently decoded.

There is no sequence between step S601 and step S602. Whether step S601 or step S602 is first performed is determined based on the pattern of the first communications device and the pattern of the second communications device. Locations of the K first time units in the first pattern are determined based on a service delay requirement of the first communications device, and locations of the K first time units in the second pattern are determined based on a service delay requirement of the second communications device. For the at least two communications devices in the target communications device group, a first time unit included in a pattern corresponding to a communications device with a small service delay is located before a first time unit included in a pattern corresponding to a communications device with a large service delay. When a first time unit in the first pattern corresponding to the first communications device is located before a first time unit in the second pattern corresponding to the second communications device, step S601 is first performed; otherwise, step S602 is first performed.

Step S603: The second communications device receives, on at least one of L second time units included in the second pattern of the second communications device, the first data and/or a second indication sent by the first communications device.

Step S604: The first communications device receives, on at least one of L second time units included in the first pattern of the first communications device, the second data and/or the third indication information sent by the second communications device.

Optionally, a manner in which the second communications device processes the received first data and/or the received second indication information is the same as a manner in which the first communications device processes the received second data and/or the received third indication information. For ease of description, the following step S603 to step S608 are described by using the first communications device as an example.

There is no sequence between step S603 and step S604. Whether step S603 or step S604 is first performed is determined based on the pattern of the first communications device and the pattern of the second communications device. After the locations of the K first time units included in the first pattern of the first communications device are determined, locations of the L second time units included in the first pattern of the first communications device can be determined; and after the locations of the K first time units included in the second pattern of the second communications device are determined, locations of the L second time units included in the second pattern of the second communications device can be determined. When a second time unit in the first pattern corresponding to the first communications device is located before a second time unit in the second pattern corresponding to the second communications device, step S604 is first performed; otherwise, step S603 is first performed.

Step S605: The first communications device decodes the received second data, and determines whether the decoding succeeds. When the decoding fails, step S606 is performed; or when the decoding succeeds, step S609 is performed.

In a possible implementation, when the decoding succeeds, second data received on a second time unit that locates after a current second time unit included in the first pattern is ignored. The current second time unit included in the first pattern is a second time unit included in the first pattern corresponding to the second communications device used to send the successfully decoded second data.

Step S606: The first communications device determines, based on the second indication information, whether the location that is of the current first time unit included in the second pattern and that is indicated by the third indication information is a last one in the K first time units included in the second pattern. If no, step S607 is performed; or if yes, step S610 is performed.

In a possible implementation, the first communications device may determine, based on the field newly added to the SA sent by the second communications device, whether the location that is of the current first time unit included in the second pattern and that is indicated by the third indication information is the last one in the K first time units included in the second pattern. For example, if the first communications device determines that the newly added field is 1, it indicates that the current first time unit is not the last first time unit of the first pattern; or if the first communications device determines that the newly added field is 0, it indicates that the current first time unit is the last first time unit of the first pattern.

Step S607: The first communications device receives the second data sent by the second communications device on a next first time unit included in the second pattern. The next first time unit is in the K first time units included in the second pattern and locates after the current first time unit that is included in the second pattern and that is indicated by the third indication information.

Step S608: The first communications device performs combined decoding on the second data received twice, and determines whether the combined decoding succeeds. When the combined decoding fails, step S606 and step S607 are repeatedly performed until the decoding succeeds or the first communications device determines that the location of the current first time unit that is included in the second pattern and that is used to send the second data is the last one in the K first time units included in the second pattern; or when the combined decoding succeeds, step S609 is performed.

Optionally, the first communications device performs the combined decoding on the second data received twice, thereby improving a success rate of decoding the second data.

Step S609: The first communications device transmits the successfully decoded data to a layer 2 and an upper layer for processing.

Step S610: The procedure ends.

For related content of the foregoing optional implementations in this embodiment of this application, refer to the foregoing embodiments. Details are not described herein again.

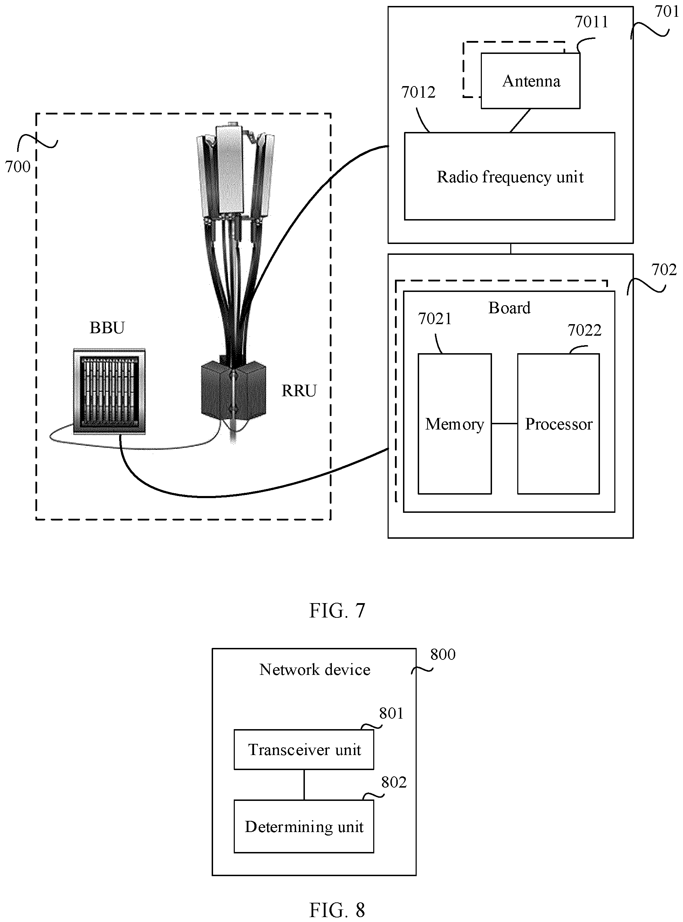

Based on the foregoing content and a same concept, an embodiment of this application provides a network device. The network device is configured to execute any solution on a network device side in the foregoing methods. FIG. 7 is a schematic structural diagram of a network device according to this application. As shown in FIG. 7, a network device 700 includes one or more remote radio units (English: remote radio unit, RRU for short) 701 and one or more baseband units (English: baseband unit, BBU for short) 702. The RRU 701 may be referred to as a transceiver unit, a transceiver machine, a transceiver circuit, a transceiver, or the like, and may include at least one antenna 7011 and a radio frequency unit 7012. The RRU 701 is mainly configured to send and receive a radio frequency signal and perform conversion between the radio frequency signal and a baseband signal. The BBU 702 may be referred to as a processing unit, a processor, or the like. The BBU 702 is mainly configured to perform baseband processing such as channel coding, multiplexing, modulation, and spectrum spreading, and is further configured to control the network device, and the like. The RRU 701 and the BBU 702 may be physically disposed together, or may be physically separated, that is, in a distributed network device. In this example, the network device 700 may be the network device 210 in FIG. 2, and may perform the solution correspondingly performed by the network device in FIG. 3.

The BBU 702 is a control center of the network device, may also be referred to as a processing unit, and is mainly configured to complete baseband processing functions such as channel coding, multiplexing, modulation, and spectrum spreading.

In an example, the BBU 702 may include one or more boards, and a plurality of boards may jointly support a radio access network of a single access standard (such as an LTE network), or may separately support radio access networks of different access standards. The BBU 702 further includes a memory 7021 and a processor 7022. The memory 7021 is configured to store a necessary instruction and necessary data. The processor 7022 is configured to control the network device to perform a necessary action, for example, is configured to control the network device to perform the method performed by the network device in any one of the foregoing embodiments. The memory 7021 and the processor 7022 may serve one or more boards. In other words, the memory and the processor may be independently disposed on each board. Alternatively, a plurality of boards may share a same memory and processor. In addition, a necessary circuit is further disposed on each board.

On an uplink, an uplink signal (including data and the like) sent by a communications device is received by using the antenna 7011. On a downlink, a downlink signal (including data and/or control information) is sent to the communications device by using the antenna 7011. In the processor 7022, service data and a signaling message are processed, and these units perform processing based on a radio access technology (such as access technologies in LTE, NR, and other evolved systems) used by a radio access network. The processor 7022 is further configured to control and manage an action of the network device, and is configured to perform processing performed by the network device in the foregoing embodiments. The processor 7022 is further configured to support the network device in performing the method performed by the network device in FIG. 3.

It can be understood that FIG. 7 shows merely a simplified design of the network device. In actual application, the network device may include any quantity of antennas, memories, processors, radio frequency units, RRUs, BBUs, and the like, and all network devices that can implement this application fall within the protection scope of this application.

For example, in this embodiment of this application, the RRU 701 is referred to as the transceiver, and the BBU 702 is referred to as the processor. In this case, the processor 7022 in the network device 700 may be configured to: read a computer instruction in the memory 7021, to determine a time window of a target communications device group, where the target communications device group includes at least two communications devices, a distance between two communications devices in the target communications device group is less than or equal to a threshold, and the time window is used to enable the at least two communications devices in the target communications device group to send and receive data in the time window through sidelink; and control the radio frequency the unit 7012 to send first indication information to the at least two communications devices in the target communications device group by using the antenna 7011, where the first indication information is used to indicate the time window.

The processor 7022 may further implement any detailed function of the network device in the method embodiment shown in FIG. 3. Details are not described herein again. For details, refer to the processing steps performed by the network device in the method embodiment shown in FIG. 3.

Based on a same concept, an embodiment of this application provides a network device. The network device is configured to execute any solution on a network device side in the foregoing methods. FIG. 8 is a schematic structural diagram of a network device according to this application. As shown in FIG. 8, a network device 800 includes a transceiver unit 801 and a determining unit 802. In this example, the network device may be the network device 210 in FIG. 2, and may perform the solution correspondingly performed by the network device in FIG. 3.

It should be understood that division of the foregoing units of the network device is merely logical function division. In actual implementation, all or some of the units may be integrated into one physical entity, or may be physically separated. In this embodiment of this application, the determining unit 802 in FIG. 8 may be implemented by the BBU 702 in FIG. 7, and the transceiver unit 801 in FIG. 8 may be implemented by the RRU 701 in FIG. 7. In other words, in this embodiment of this application, the determining unit 802 may perform the solution performed by the BBU 702 in FIG. 7, and the transceiver unit 801 may perform the solution performed by the RRU 701 in FIG. 7. For other content, refer to the foregoing content. Details are not described herein again.

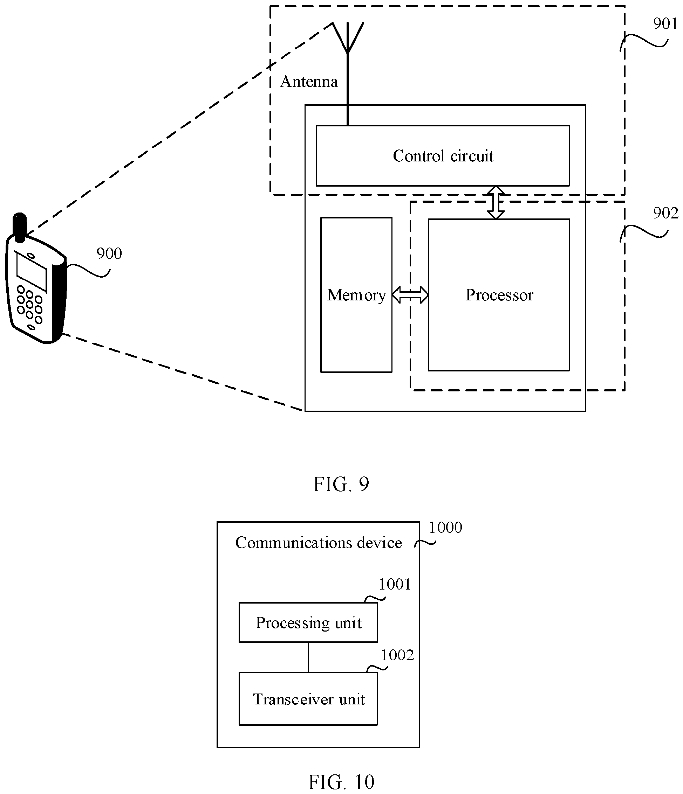

Based on a same concept, an embodiment of this application provides a communications device. The communications device is configured to execute any solution on a first communications device side or a second communications device side in the foregoing methods. FIG. 9 is a schematic structural diagram of a communications device according to this application. As shown in FIG. 9, a communications device 900 includes a processor, a memory, a control circuit, and an antenna. The processor is mainly configured to: process a communication protocol and communication data, control the entire communications device, execute a software program, and process data of the software program, for example, is configured to support the communications device 900 in performing the method performed by the communications device 900 in any one of the foregoing embodiments. The memory is mainly configured to store the software program and the data. The control circuit is mainly configured to perform conversion between a baseband signal and a radio frequency signal and process the radio frequency signal. The control circuit, together with the antenna, may also be referred to as a transceiver that is mainly configured to send and receive a radio frequency signal in an electromagnetic wave form.

After the communications device is powered on, the processor may read a software program in a storage unit, explain and execute an instruction of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the communications device 900, the radio frequency circuit receives the radio frequency signal by using the antenna, converts the radio frequency signal into a baseband signal, and outputs the baseband signal to the processor. The processor converts the baseband signal into data, and processes the data.

A person skilled in the art may understand that, for ease of description, FIG. 9 shows only one memory and only one processor. In an actual communications device, there may be a plurality of processors and a plurality of memories. The memory may also be referred to as a storage medium, a storage device, or the like. This is not limited in this application.

In an optional implementation, the processor may include a baseband processor and a central processing unit. The baseband processor is mainly configured to process the communication protocol and the communication data, and the central processing unit is mainly configured to: control the entire communications device 900, execute the software program, and process the data of the software program. Functions of the baseband processor and the central processing unit are integrated into the processor in FIG. 9. A person skilled in the art may understand that the baseband processor and the central processing unit each may be an independent processor, and are interconnected by using technologies such as a bus. A person skilled in the art may understand that the communications device may include a plurality of baseband processors to adapt to different network standards, the communications device 900 may include a plurality of central processing units to improve a processing capability of communications device 900, and parts of the communications device 900 may be connected by using various buses. The baseband processor may also be expressed as a baseband processing circuit or a baseband processing chip. The central processing unit may also be expressed as a central processing circuit or a central processing chip. A function of processing the communication protocol and the communication data may be embedded into the processor, or may be stored in the storage unit in a form of a software program, so that the processor executes the software program to implement a baseband processing function.

In this embodiment of this application, an antenna having a transmit/receive function and the control circuit may be considered as a transceiver unit 901 of the communications device 900, and a processor having a processing function may be considered as a processing unit 902 of the communications device 900. The transceiver unit 901 may also be referred to as a transceiver, a transceiver machine, a transceiver apparatus, or the like. Optionally, a component that is in the transceiver unit 901 and that is configured to implement a receiving function may be considered as a receiving unit, and a component that is in the transceiver unit 901 and that is configured to implement a sending function may be considered as a sending unit. To be specific, the transceiver unit 901 includes the receiving unit and the sending unit. For example, the receiving unit may also be referred to as a receiver machine, a receiver, a receiver circuit, or the like, and the sending unit may be referred to as a transmitter machine, a transmitter, a transmitter circuit, or the like.

On a downlink, a downlink signal (including data and/or control information) sent by a network device is received by using the antenna. On an uplink, an uplink signal (including data and/or control information) is sent to the network device by using the antenna. In the processor, service data and a signaling message are processed, and these units perform processing based on a radio access technology (such as access technologies in LTE, NR, and other evolved systems) used by a radio access network. The processor is further configured to control and manage an action of the communications device, and is configured to perform processing performed by the communications device in the foregoing embodiments. The processor is further configured to support the communications device in performing the method performed by the communications device in FIG. 9.

It can be understood that FIG. 9 shows merely a simplified design of the communications device. In actual application, the communications device may include any quantity of antennas, memories, processors, and the like, and all communications devices that can implement this application fall within the protection scope of this application.

For example, in this application, the transceiver unit is referred to as the transceiver, and the processing unit is referred to as the processor. In this case, the transceiver in the communications device 900 is configured to receive first indication information sent by the network device, where the first indication information is used to indicate a time window, the time window is determined by the network device for a target communications device group, the target communications device group includes at least two communications devices, a distance between two communications devices in the target communications device group is less than or equal to a threshold, and the first communications device is any one in the target communications device group. The processor is configured to parse the first indication information received by the transceiver, to determine the time window. The transceiver is further configured to send and receive data in the time window.

The processor may further implement any detailed function of the communications device in the method embodiment shown in FIG. 6A and FIG. 6B. Details are not described herein again. For details, refer to the processing steps performed by the communications device in the method embodiment shown in FIG. 6A and FIG. 6B.

Based on a same concept, an embodiment of this application provides a communications device. The communications device is configured to execute any solution on a first communications device side or a second communications device side in the foregoing methods. FIG. 10 is a schematic structural diagram of a communications device according to this application. As shown in FIG. 10, a communications device 1000 includes a processing unit 1001 and a transceiver unit 1002. The communications device in this example may be the first communications device or the second communications device in the foregoing content, and may execute the solution correspondingly executed by the first communications device in FIG. 3, or may execute the solution correspondingly executed by the first communications device or the second communications device in FIG. 6A and FIG. 6B. The communications device may alternatively be any one of the communications device 201, the communications device 202, the communications device 203, the communications device 204, and the communications device 205 in FIG. 2.

It should be understood that division of the foregoing units of the communications device is merely logical function division. In actual implementation, all or some of the units may be integrated into one physical entity, or may be physically separated. In this embodiment of this application, the processing unit 1001 in FIG. 10 may be implemented by the processing unit 902 in FIG. 9, and the transceiver unit 1002 in FIG. 10 may be implemented by the transceiver unit 901 in FIG. 9. In other words, in this embodiment of this application, the processing unit 1001 may perform the solution performed by the processing unit 902 in FIG. 9, and the transceiver unit 1002 may perform the solution performed by the transceiver unit 901 in FIG. 9. For other content, refer to the foregoing content. Details are not described herein again.

All or some of the foregoing embodiments may be implemented by using software, hardware, or a combination thereof. When a software program is used for implementation, all or some of the embodiments may be implemented in a form of a computer program product. The computer program product includes one or more instructions. When a computer program instruction is loaded and executed on a computer, all or some of the procedures or functions according to the embodiments of this application are generated. The computer may be a general-purpose computer, a special-purpose computer, a computer network, or another programmable apparatus. The instructions may be stored in a computer storage medium, or may be transmitted from a computer storage medium to another computer storage medium. For example, the instructions may be transmitted from a website, computer, server, or data center to another website, computer, server, or data center in a wired (for example, a coaxial cable, an optical fiber, or a twisted pair) or wireless (for example, infrared, radio, or microwave) manner. The computer storage medium may be any medium accessible by a computer, or a data storage device, such as a server or a data center, integrating one or more media. The medium may be a magnetic medium (for example, a floppy disk, a hard disk, a magnetic tape, or a magnetic-optical disc (MO)), an optical medium (for example, an optical disc), a semiconductor medium (for example, a ROM, an EPROM, an EEPROM, or a solid-state drive (solid state disk, SSD)), or the like.

The embodiments of this application are described with reference to the flowcharts and/or block diagrams of the method, the device (system), and the computer program product according to the embodiments of this application. It should be understood that instructions may be used to implement each procedure and/or each block in the flowcharts and/or the block diagrams and a combination of a procedure and/or a block in the flowcharts and/or the block diagrams. These instructions may be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

Clearly, a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A data transmission method, comprising:

determining, by a network device, a time window of a target communications device group, wherein the target communications device group comprises at least two communications devices, a distance between two communications devices in the target communications device group is less than or equal to a threshold, and the time window is used to enable the at least two communications devices in the target communications device group to send and receive data in the time window through sidelink; and

sending, by the network device, first indication information to the at least two communications devices in the target communications device group, wherein the first indication information is used to indicate the time window.

2. The method according to claim 1, wherein the time window comprises N time units, and the N time units comprise K first time units and L second time units, wherein N is an integer greater than or equal to 2, K is an integer greater than or equal to 1, and L is an integer greater than or equal to 1 and less than or equal to (N-K); the first indication information comprises at least two patterns, each of the at least two patterns comprises a combination of the K first time units and the L second time units, and the at least two patterns has different combination forms of the K first time units and the L second time units; and

the sending, by the network device, first indication information to the at least two communications devices in the target communications device group comprises:

sending, by the network device, a first pattern to a first communications device, and sending a second pattern to a second communications device, wherein the first pattern is used to indicate the first communications device to send first data on K first time units comprised in the first pattern, the second pattern is used to indicate the second communications device to receive the first data on at least one of L second time units comprised in the second pattern, both the first pattern and the second pattern belong to the at least two patterns, and both the first communications device and the second communications device belong to the target communications device group.

3. The method according to claim 1, wherein the method further comprises:

determining, by the network device, the target communications device group based on parameter information of the at least two communications devices, wherein the parameter information comprises location information of the at least two communications devices.

4. The method according to claim 1 or 2, wherein the determining, by a network device, a time window of a target communications device group comprises:

determining, by the network device, the time window of the target communications device group based on a quantity of communications devices in the target communications device group.

5. The method according to claim 2, wherein locations of the K first time units in the first pattern are determined based on a service delay requirement of the first communications device, and locations of K first time units in the second pattern are determined based on a service delay requirement of the second communications device, wherein

for the at least two communications devices in the target communications device group, a first time unit comprised in a pattern corresponding to a communications device with a small service delay is located before a first time unit comprised in a pattern corresponding to a communications device with a large service delay.

6. A data transmission method, comprising:

receiving, by a first communications device, first indication information sent by a network device, wherein the first indication information is used to indicate a time window, the time window is determined by the network device for a target communications device group, the target communications device group comprises at least two communications devices, a distance between two communications devices in the target communications device group is less than or equal to a threshold, and the first communications device is any one in the target communications device group; and

sending and receiving, by the first communications device, data in the time window.

7. The method according to claim 6, wherein the time window comprises N time units, and the N time units comprise K first time units and L second time units, wherein N is an integer greater than or equal to 2, K is an integer greater than or equal to 1, and L is an integer greater than or equal to 1 and less than or equal to (N-K); the first indication information comprises at least two patterns, each of the at least two patterns comprises a combination of the K first time units and the L second time units, and the at least two patterns has different combination forms of the K first time units and the L second time units;

the receiving, by a first communications device, first indication information sent by a network device comprises:

receiving, by the first communications device, a first pattern sent by the network device, wherein the first pattern belongs to the at least two patterns; and

the sending and receiving, by the first communications device, data in the time window comprises:

sending, by the first communications device, first data on K first time units comprised in the first pattern, and receiving second data on at least one of L second time units comprised in the first pattern, wherein the second data is sent by a second communications device on K first time units comprised in a second pattern, the second pattern belongs to the at least two patterns, and the second communications device is one in the target communications device group other than the first communications device.

8. The method according to claim 7, wherein the method further comprises:

sending, by the first communications device, second indication information on the K first time units comprised in the first pattern, wherein the second indication information is used to indicate a location, in the K first time units comprised in the first pattern, of a current first time unit on which the first data is sent and that is comprised in the first pattern.

9. The method according to claim 7, wherein the method further comprises:

receiving, by the first communications device, third indication information, wherein the third indication information is used to indicate a location, in the K first time units comprised in the second pattern, of a current first time unit on which the second data is sent and that is comprised in the second pattern;

when the first communications device fails to decode the second data, and determines that the location that is of the current first time unit comprised in the second pattern and that is indicated by the third indication information is not a last one in the K first time units comprised in the second pattern,

receiving, by the first communications device, the second data sent by the second communications device on a next first time unit comprised in the second pattern, wherein the next first time unit is in the K first time units comprised in the second pattern and locates after the current first time unit that is comprised in the second pattern and that is indicated by the third indication information; and

performing, by the first communications device, combined decoding on the second data received twice.

10. A network device, comprising:

a processor, configured to determine a time window of a target communications device group, wherein the target communications device group comprises at least two communications devices, a distance between two communications devices in the target communications device group is less than or equal to a threshold, and the time window is used to enable the at least two communications devices in the target communications device group to send and receive data in the time window through sidelink; and

a transceiver, configured to send first indication information to the at least two communications devices in the target communications device group, wherein the first indication information is used to indicate the time window.

11. The network device according to claim 10, wherein the time window comprises N time units, and the N time units comprise K first time units and L second time units, wherein N is an integer greater than or equal to 2, K is an integer greater than or equal to 1, and L is an integer greater than or equal to 1 and less than or equal to (N-K); the first indication information comprises at least two patterns, each of the at least two patterns comprises a combination of the K first time units and the L second time units, and the at least two patterns has different combination forms of the K first time units and the L second time units; and

the transceiver is configured to:

send a first pattern to a first communications device, and send a second pattern to a second communications device, wherein the first pattern is used to indicate the first communications device to send first data on K first time units comprised in the first pattern, the second pattern is used to indicate the second communications device to receive the first data on at least one of L second time units comprised in the second pattern, both the first pattern and the second pattern belong to the at least two patterns, and both the first communications device and the second communications device belong to the target communications device group.

12. The network device according to claim 10, wherein the processor is further configured to:

determine the target communications device group based on parameter information of the at least two communications devices, wherein the parameter information comprises location information of the at least two communications devices.

13. The network device according to claim 10 or 11, wherein the processor is configured to:

determine the time window of the target communications device group based on a quantity of communications devices in the target communications device group.

14. The network device according to claim 11, wherein locations of the K first time units in the first pattern are determined based on a service delay requirement of the first communications device, and locations of K first time units in the second pattern are determined based on a service delay requirement of the second communications device, wherein in the first communications device and the second communications device, for the at least two communications devices in the target communications device group, a first time unit comprised in a pattern corresponding to a communications device with a small service delay is located before a first time unit comprised in a pattern corresponding to a communications device with a large service delay.

15. A communications device, comprising:

a transceiver, configured to receive first indication information sent by a network device, wherein the first indication information is used to indicate a time window, the time window is determined by the network device for a target communications device group, the target communications device group comprises at least two communications devices, a distance between two communications devices in the target communications device group is less than or equal to a threshold, and the first communications device is any one in the target communications device group; and
a processor, configured to parse the first indication information received by the transceiver, to determine the time window, wherein
the transceiver is further configured to send and receive data in the time window.

16. The communications device according to claim 15, wherein the time window comprises N time units, and the N time units comprise K first time units and L second time units, wherein N is an integer greater than or equal to 2, K is an integer greater than or equal to 1, and L is an integer greater than or equal to 1 and less than or equal to (N-K); the first indication information comprises at least two patterns, each of the at least two patterns comprises a combination of the K first time units and the L second time units, and the at least two patterns has different combination forms of the K first time units and the L second time units; and
the transceiver is configured to:
receive a first pattern sent by the network device, wherein the first pattern belongs to the at least two patterns; and
send first data on K first time units comprised in the first pattern, and receive second data on at least one of L second time units comprised in the first pattern, wherein the second data is sent by a second communications device on K first time units comprised in a second pattern, the second pattern belongs to the at least two patterns, and the second communications device is one in the target communications device group other than the first communications device.

17. The communications device according to claim 16, wherein the transceiver is further configured to:
send second indication information on the K first time units comprised in the first pattern, wherein the second indication information is used to indicate a location, in the K first time units comprised in the first pattern, of a current first time unit on which the first data is sent and that is comprised in the first pattern.

18. The communications device according to claim 16, wherein the transceiver is further configured to:

receive third indication information, wherein the third indication information is used to indicate a location, in the K first time units comprised in the second pattern, of a current first time unit on which the second data is sent and that is comprised in the second pattern; and
the processor is further configured to:

when the processor fails to decode the second data, and determines that the location that is of the current first time unit comprised in the second pattern and that is indicated by the third indication information is not a last one in the K first time units comprised in the second pattern, control the transceiver to receive the second data sent by the second communications device on a next first time unit comprised in the second pattern, wherein the next first time unit is in the K first time units comprised in the second pattern and locates after the current first time unit that is comprised in the second pattern and that is indicated by the third indication information; and
perform combined decoding on the second data received twice by the transceiver.

19. A computer storage medium, wherein the computer storage medium stores a computer executable instruction, and when the computer executable instruction is invoked by a computer, the computer is enabled to perform the method according to any one of claims 1 to 9.

FIG. 1

FIG. 2

```
┌──────────────────┐                          ┌──────────────────┐
│                  │                          │      First       │
│  Network device  │                          │  communications  │
│                  │                          │      device      │
└────────┬─────────┘                          └────────┬─────────┘
         │                                             │
    ┌────┴──────────────────────────────┐  S301        │
    │  Determine a time window of a target│              │
    │    communications device group      │             │
    └────┬──────────────────────────────┘              │
         │                                             │
         │    ┌───────────────────────────────────┐ S302│
         │    │  First indication information used to │    │
         │    │       indicate the time window      │    │
         │    └───────────────────────────────────┘     │
         │─────────────────────────────────────────────▶│
         │                                             │
         │              ┌─────────────────────────────┴──┐ S303
         │              │  Send and receive data in the time window │
         │              └────────────────────────────────┘
         │                                             │
```

FIG. 3

FIG. 4

Second location    Fourth location    Sixth location    Eighth location

First location    Third location    Fifth location    Seventh location

First time unit          Second time unit

FIG. 5(a)

Second location    Fourth location    Sixth location    Eighth location

First location    Third location    Fifth location    Seventh location

First time unit          Second time unit

FIG. 5(b)

FIG. 5(c)

First
communications
device

Second
communications
device

Send first data and/or second
indication information on K first time
units included in a first pattern of the
first communications device

S601

Receive, on at least one of L second time units included
in the second pattern of the second communications
device, the first data and/or a second indication sent by
the first communications device

S603

Send second data and/or third
indication information on K
first time units included in a
second pattern of the second
communications device

S602

Receive, on at least one of L second time units
included in the first pattern of the first
communications device, the second data and/
or the third indication information sent by the
second communications device

S604

TO
FIG. 6B

TO
FIG. 6B

FIG. 6A

CONT.
FROM
FIG. 6A

CONT.
FROM
FIG. 6A

S605 — Decode the received second data, and determine whether the decoding succeeds

Succeed

Fail

S606 — Determine, based on the second indication information, whether a location that is of a current first time unit included in the second pattern and that is indicated by the third indication information is a last one in the K first time units included in the second pattern

Yes

No

S607 — Receive the second data sent by the second communications device on a next first time unit included in the second pattern

S608 — Perform combined decoding on the second data received twice, and determine whether the combined decoding succeeds

Fail

Succeed

S610 — End

S609 — Transmit successfully decoded data to a layer 2 and an upper layer for processing

FIG. 6B

FIG. 7

FIG. 8

FIG. 9

FIG. 10

## INTERNATIONAL SEARCH REPORT

| International application No. |
| --- |
| **PCT/CN2019/091783** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W;H04L

Documentation searched other than minimum documentation to the extent that such documents are included in the fields searched

Electronic data base consulted during the international search (name of data base and, where practicable, search terms used)

CNPAT; CNKI; WPI; EPODOC; 3GPP: 车联网, 时间窗, 时间, 时域, 小于, 距离, 侧行链路, 远近效应, 组, V2V, V2X, V2I, V2P, time, window, distance, threshold, sidelink, far, near, effect, group

**C. DOCUMENTS CONSIDERED TO BE RELEVANT**

| Category* | Citation of document, with indication, where appropriate, of the relevant passages | Relevant to claim No. |
| --- | --- | --- |
| X | CN 108029101 A (QUALCOMM INCOPORATED) 11 May 2018 (2018-05-11) description, paragraphs [0033], [0054], [0063], [0083]-[0087], [0096] and [0104]-[0116], and figures 4, 6, 7 and 9-11 | 1, 3, 4, 6, 10, 12, 13, 15, 19 |
| X | QUALCOMM INCORPORATED. "3GPP TSG-RAN WG1#82bis R1-155755" *V2V System Level Performance*, 09 October 2015 (2015-10-09), sections 1 and 3 | 1, 3, 4, 6, 10, 12, 13, 15, 19 |
| A | WO 2018064179 A1 (INTEL CORPORATION) 05 April 2018 (2018-04-05) entire document | 1-19 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 July 2019** | **30 August 2019** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2019/091783**

| Patent document cited in search report | | | Publication date (day/month/year) | Patent family member(s) | | | Publication date (day/month/year) |
|---|---|---|---|---|---|---|---|
| CN | 108029101 | A | 11 May 2018 | TW | 201713145 | A | 01 April 2017 |
| | | | | KR | 20180058771 | A | 01 June 2018 |
| | | | | EP | 3445108 | A1 | 20 February 2019 |
| | | | | WO | 2017052757 | A1 | 30 March 2017 |
| | | | | JP | 2018527853 | A | 20 September 2018 |
| | | | | US | 2017086216 | A1 | 23 March 2017 |
| | | | | BR | 112018005793 | A2 | 16 October 2018 |
| | | | | EP | 3354091 | A1 | 01 August 2018 |
| | | | | IN | 201847012817 | A | 13 April 2018 |
| WO | 2018064179 | A1 | 05 April 2018 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810792771